# EUROPEAN PATENT SPECIFICATION

(11) **EP 3 275 933 B1**
(45) Date of publication and mention of the grant of the patent: **14.10.2020**
(21) Application number: 16768387.9
(22) Date of filing: 07.03.2016
(51) Int. Cl.: C08L 27/06, C08K 3/26, C08K 5/07, C08K 5/098, C08K 5/3492

(54) **VINYL CHLORIDE-BASED RESIN COMPOSITION**
VINYLCHLORIDBASIERTE HARZZUSAMMENSETZUNG
COMPOSITION DE RÉSINE À BASE DE CHLORURE DE VINYLE

(30) Priority: 26.03.2015 JP 2015064111
(43) Date of publication of application: 31.01.2018
(73) Proprietor: Adeka Corporation, Tokyo 116-8554 (JP)
(72) Inventor: MITAMURA, Ryusuke, Saitama-shi Saitama 336-0022 (JP); ISHIZUKA, Yuto, Saitama-shi Saitama 336-0022 (JP); NAGAHAMA, Masaru, Saitama-shi Saitama 336-0022 (JP); TANAKA, Kazumasa, Saitama-shi Saitama 336-0022 (JP)
(74) Representative: Forstmeyer, Dietmar
(86) International application number: PCT/JP2016/057016
(87) International publication number: WO 2016/152484

(56) References cited:
- WO-A1-2014/141608
- JP-A- H1 171 356
- JP-A- 2015 000 880

## Description

The present invention relates to a vinyl chloride-based resin composition, and specifically to a vinyl chloride-based resin composition having excellent weather resistance and coloration resistance.

Vinyl chloride-based resins can be used in hard products, and can also be used in various applications ranging from agricultural sheets to building materials such as window frames because the hardness thereof can be easily adjusted by using a plasticizer.

However, it is known that vinyl chloride-based resins have poor light stability and poor thermal stability and thus are likely to decompose mainly due to dehydrohalogenation while heat molding is being performed or while products are being used. Therefore, attempts have been made to improve the stability of vinyl chloride-based resins by blending various stabilizers such as a thermal stabilizer, a stabilizing aid, an antioxidant, and an ultraviolet absorber. In particular, an ultraviolet absorber is used in order to impart weather resistance (Patent Literature 1 and 2).

However, with conventional formulations, sufficient weather resistance cannot be obtained, and properties such as thermal stability and coloration resistance for preventing yellowing are insufficient. Furthermore, when the conventional formulations are used in transparent products that require transparency, a problem arises in that sufficient transparency cannot be obtained.

WO2014141608 A1, JP2015000880 A and JPH1171356 A are further relevant prior art.
Patent Literature 1: JP 2001-181461A
Patent Literature 2: US 2006/0122293A1

Therefore, it is an object of the present invention to provide a vinyl chloride-based resin composition having excellent weather resistance, coloration resistance, and thermal stability. It is also an object thereof to provide a vinyl chloride-based resin composition having excellent weather resistance, coloration resistance, and thermal stability as well as excellent transparency. It is also an object thereof to provide a molded article having excellent weather resistance, coloration resistance, and thermal stability. It is also an object thereof to provide a molded article having excellent weather resistance, coloration resistance, and thermal stability as well as excellent transparency.

As a result of intensive research to solve the foregoing problems, the inventors achieved the present invention.

The present invention provides a vinyl chloride-based resin composition as defined in claims 1 and 2.

The present invention further provides the use of the vinyl chloride-based resin composition in transparent products.

The present invention further provides a molded article made of the vinyl chloride-based resin composition.

With the present invention, a vinyl chloride-based resin composition having excellent weather resistance, coloration resistance, and thermal stability can be provided. Also, a vinyl chloride-based resin composition having excellent weather resistance, coloration resistance, and thermal stability as well as excellent transparency can be provided. Moreover, a molded article having excellent weather resistance, coloration resistance, and thermal stability can be provided. Furthermore, a molded article having excellent weather resistance, coloration resistance, and thermal stability as well as excellent transparency can be provided.

Hereinafter, the present invention will be described in detail based on a preferred embodiment.

First, a vinyl chloride-based resin to be used in a vinyl chloride-based resin composition of the present invention will be described. The vinyl chloride-based resin is obtained through bulk polymerization, solution polymerization, suspension polymerization, emulsion polymerization, or the like, but there is no particular limitation to these polymerization methods. Examples of the vinyl chloride-based resin include: vinyl chloride-based resins such as polyvinyl chloride, chlorinated polyvinyl chloride, polyvinylidene chloride, chlorinated polyethylene, a vinyl chloride-vinyl acetate copolymer, a vinyl chloride-ethylene copolymer, a vinyl chloride-propylene copolymer, a vinyl chloride-styrene copolymer, a vinyl chloride-isobutylene copolymer, a vinyl chloride-vinylidene chloride copolymer, a vinyl chloride-styrene-maleic anhydride terpolymer, a vinyl chloride-styrene-acrylonitrile copolymer, a vinyl chloride-butadiene copolymer, a vinyl chloride-isoprene copolymer, a vinyl chloride-chlorinated propylene copolymer, a vinyl chloride-vinylidene chloride-vinyl acetate terpolymer, a vinyl chloride-maleate copolymer, a vinyl chloride-methacrylate copolymer, a vinyl chloride-acrylonitrile copolymer, copolymers of vinyl chloride and various vinyl ethers; blends of the vinyl chloride-based resins; and blends, block copolymers, and graft copolymers of these resins and other synthetic resins containing no chlorine such as an acrylonitrile-styrene copolymer, an acrylonitrile-butadiene-styrene copolymer, an ethylene-vinyl acetate copolymer, an ethylene-ethyl (meth)acrylate copolymer, and polyester. Two or more of these vinyl chloride-based resins may be mixed or the vinyl chloride-based resins may be mixed with other synthetic resins.

It is preferable to use polyvinyl chloride as the vinyl chloride-based resin to be used in the present invention in terms of weather resistance, coloration resistance, and thermal stability.

Next, a component (A) of the vinyl chloride-based resin composition of the present invention will be described.

In the present invention, an organic acid zinc salt is used as the component (A). Examples of the organic acid zinc salt include zinc salts of organic carboxylic acids, phenols, and organic phosphoric acids.

Examples of the organic carboxylic acid include: monovalent carboxylic acids such as acetic acid, propionic acid, butyric acid, valeric acid, caproic acid, enanthic acid, caprylic acid, pelargonic acid, 2-ethylhexylic acid, neodecanoic acid, capric acid, undecanoic acid, lauric acid, tridecanoic acid, myristic acid, palmitic acid, isostearic acid, stearic acid, 12-hydroxystearic acid, behenic acid, montanic acid, benzoic acid, monochlorobenzoic acid, p-tertiary-butylbenzoic acid, dimethylhydroxybenzoic acid, 3,5-di-tertiary-butyl-4-hydroxybenzoic acid, toluic acid, dimethylbenzoic acid, ethylbenzoic acid, cumic acid, n-propylbenzoic acid, aminobenzoic acid, N,N-dimethylaminobenzoic acid, acetoxybenzoic acid, salicylic acid, p-tertiary-octylsalicylic acid, elaidic acid, oleic acid, linoleic acid, linolenic acid, thioglycollic acid, mercaptopropionic acid, and octylmercaptopropionic acid; divalent carboxylic acids such as oxalic acid, malonic acid, succinic acid, glutaric acid, adipic acid, pimelic acid, suberic acid, azelaic acid, sebacic acid, phthalic acid, isophthalic acid, terephthalic acid, hydroxyphthalic acid, chlorophthalic acid, aminophthalic acid, maleic acid, fumaric acid, citraconic acid, mesaconic acid, itaconic acid, aconitic acid, and thiodipropionic acid, or monoester or monoamide compounds thereof; and diester or triester compounds of trivalent or tetravalent carboxylic acids such as butanetricarboxylic acid, butanetetracarboxylic acid, hemimellitic acid, trimellitic acid, mellophanic acid, and pyromellitic acid.

Examples of the phenols include tertiary-butylphenol, nonylphenol, dinonylphenol, cyclohexylphenol, phenylphenol, octylphenol, phenol, cresol, xylenol, n-butylphenol, isoamylphenol, ethylphenol, isopropylphenol, isooctylphenol, 2-ethylhexylphenol, tertiary-nonylphenol, decylphenol, tertiary-octylphenol, isohexylphenol, octadecylphenol, di-isobutylphenol, methylpropylphenol, diamylphenol, methylisohexylphenol, and methyl-tertiary-octylphenol.

Examples of the organic phosphoric acids include mono- or di-octylphosphoric acid, mono- or di-dodecyl phosphoric acid, mono- or di-octadecylphosphoric acid, mono- or di-(nonylphenyl)phosphoric acid, nonylphenyl phosphonate, and stearyl phosphonate.

The organic acid zinc salt serving as the component (A) of the present invention may be an acid salt, a neutral salt, a basic salt, or an overbased complex obtained by neutralizing a portion or all of the bases in a basic salt with carbonic acid.

The organic acid zinc salts may be used alone or in combination of two or more.

In the present invention, it is preferable to use an organic carboxylic acid salt as the organic acid zinc salt serving as the component (A) in terms of thermal stability and coloration resistance.

The content of the component (A) in the vinyl chloride-based resin composition of the present invention is 0.01 to 10.0 parts by mass with respect to 100 parts by mass of the vinyl chloride-based resin, and preferably 0.05 to 5.0 parts by mass and more preferably 0.1 to 3.0 parts by mass in terms of thermal stability and coloration resistance. When the content thereof is smaller than 0.01 parts by mass, the thermal stability and coloration resistance are insufficient, and when the content thereof exceeds 10.0 parts by mass, the thermal stability may decrease.

Next, a component (B) of the vinyl chloride-based resin composition of the present invention will be described.

In the present invention, a β-diketone compound is used as the component (B). Examples of the β-diketone compound include acetylacetone, triacetylmethane, 2,4,6-heptatrione, butanoylacetylmethane, lauroylacetylmethane, palmitoylacetylmethane, stearoylbenzoylmethane, palmitoylbenzoylmethane, distearoylmethane, stearoylacetylmethane, phenylacetylacetylmethane, dicyclohexylcarbonylmethane, benzoylformylmethane, benzoylacetylmethane, dibenzoylmethane, octylbenzoylmethane, bis(4-octylbenzoyl)methane, benzoyldiacetylmethane, 4-methoxybenzoylbenzoylmethane, bis(4-carboxymethylbenzoyl)methane, 2-carboxymethylbenzoylacetyloctylmethane, dehydroacetic acid, ethyl acetoacetate, cyclohexane-1,3-dione, methyl 3,6-dimethyl-2,4-dioxycyclohexane-1 carboxylate, 2-acetylcyclohexanone, dimedone, and 2-benzoylcyclohexane. Metal salts thereof are also useful. Examples of the metal salts include lithium salts, sodium salts, potassium salts, calcium salts, zinc salts, magnesium salts, and aluminum salts. Preferred examples of the metal salts include calcium acetylacetonate and zinc acetylacetonate. The β-diketone compounds may be used alone or in combination of two or more.

Out of the β-diketone compounds serving as the component (B), debenzoylmethane and stearoylbenzoylmethane are preferable in terms of thermal stability and coloration resistance.

The content of the β-diketone compound serving as the component (B) in the vinyl chloride-based resin composition of the present invention is 0.01 to 10.0 parts by mass with respect to 100 parts by mass of the vinyl chloride-based resin, and preferably 0.03 to 5.0 parts by mass and more preferably 0.05 to 3.0 parts by mass in terms of thermal stability and coloration resistance. When the content thereof is smaller than 0.01 parts by mass, the coloration resistance is insufficient, and when the content thereof exceeds 10.0 parts by mass, the thermal stability may decrease.

Next, a component (C) of the vinyl chloride-based resin composition of the present invention will be described.

The vinyl chloride-based resin composition of the present invention contains one or more triazine-based compounds as a component (C), the triazine-based compounds being selected from the following Compounds No. 1 to No. 5.

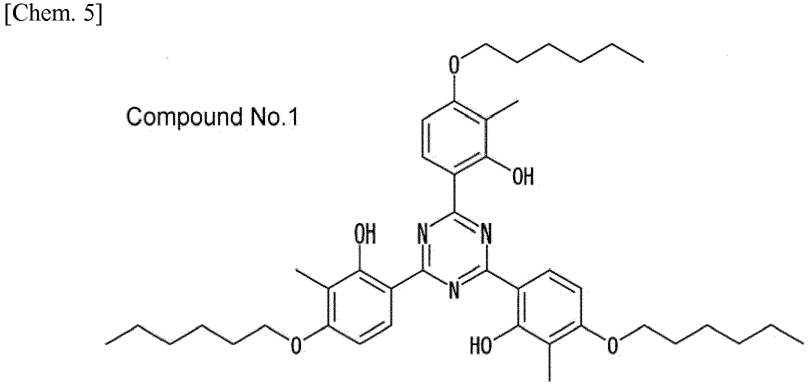

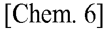

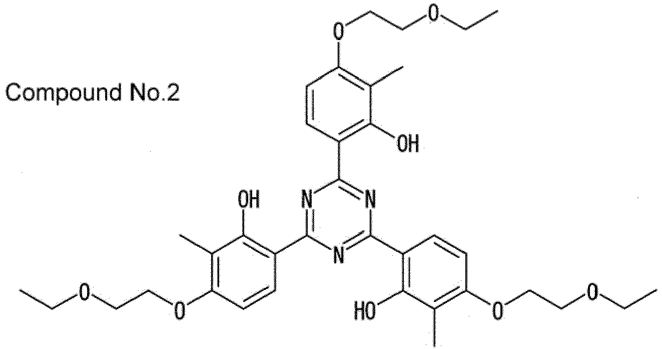

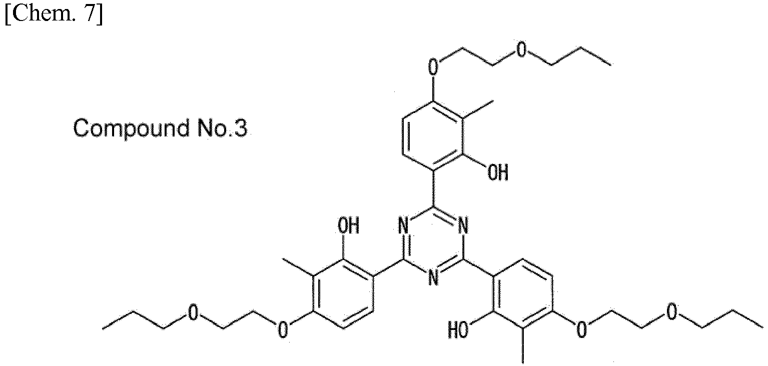

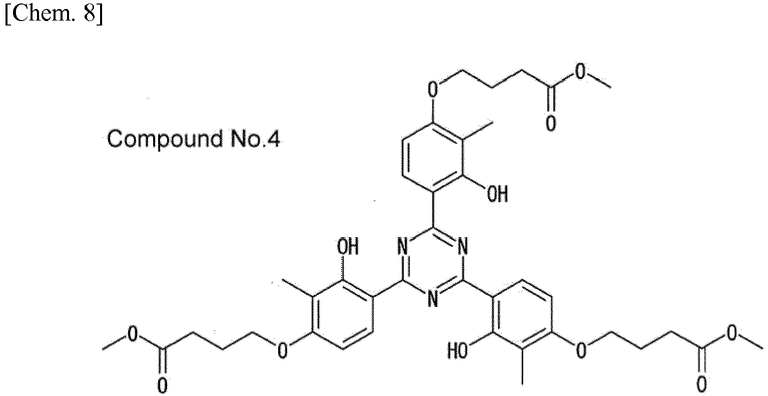

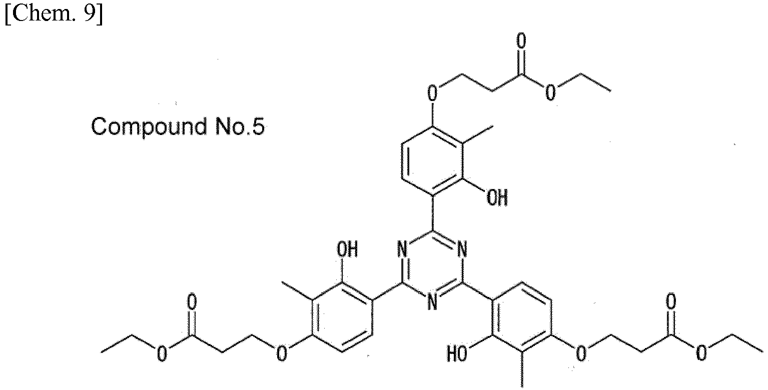

The content of the triazine-based compound serving as the component (C) in the vinyl chloride-based resin composition of the present invention is 0.01 to 20.0 parts by mass with respect to 100 parts by mass of the vinyl chloride-based resin, and preferably 0.05 to 10.0 parts by mass and more preferably 0.1 to 5.0 parts by mass in terms of weather resistance, coloration resistance, and thermal stability.

It is preferable to blend a hydrotalcite compound as a component (D) into the vinyl chloride-based resin composition of the present invention.

In the present invention, the hydrotalcite compound refers to a carbonate double salt compound containing magnesium and/or zinc and aluminum. The hydrotalcite compound may be a natural product or a synthetic product. Examples of the method of synthesizing the synthetic product include known methods disclosed in JP S46-2280B, JP S50-30039B, JP S51-29129B, JP S61-174270A, and the like. In the present invention, the hydrotalcite compound can be used without being limited by the crystal structures, the crystal particle diameters, the presence or absence of crystal water, the amount of crystal water, and the like.

The hydrotalcite may be treated with perchloric acid. The hydrotalcite may also be coated with a higher fatty acid such as stearic acid, a metal salt of a higher fatty acid such as an alkali metal oleate, a metal salt of an organic sulfonic acid such as an alkali metal dodecylbenzenesulfonate, a higher fatty acid amide, a higher fatty acid ester, wax, or the like.

Examples of the hydrotalcite compound serving as the component (D) includes compounds represented by Formula (3).

Mgₓ₁Znₓ₂Al₂(OH)₂₍ₓ₁₊ₓ₂₎₊₄·CO₃·mH₂O (3)

(It should be noted that x1 and x2 in the formula are numbers that satisfy the conditions shown by the following formulae: 0≤x2/x1<10 and 2≤x1+x2<20, and m is a real number.)

It is preferable to use a zinc-modified hydrotalcite compound as the hydrotalcite compound serving as the component (D) of the present invention in terms of thermal stability and coloration resistance. The zinc-modified hydrotalcite compound is particularly preferable when the vinyl chloride-based resin composition is to be used in a transparent product.

It is preferable to use compounds represented by Formula (4) as the zinc-modified hydrotalcite compound.

M_{y1}Zn_{y2}Alₓ(OH)₂(CO₃)_{x/2}·mH₂O (4)

(It should be noted that M in the formula is magnesium, or magnesium and calcium, and m is 0 or any positive number, x, y1 and y2 are numbers that satisfy the conditions shown by the following formulae: 0<x≤0.5, y1+y2=1-x, y1≥y2, 0.3≤y1<1, and 0<y2<0.5.)

Specific examples of the zinc-modified hydrotalcite compound used in the present invention include compounds as shown below:
Mg_{0.38}Zn_{0.3}Al_{0.32}(OH)₂(CO₃)_{0.16}·0.2H₂O
Mg_{0.45}Zn_{0.23}Al_{0.32}(OH)₂(CO₃)_{0.16}
Mg_{0.48}Zn_{0.18}Al_{0.34}(OH)₂(CO₃)_{0.17}
Mg_{0.48}Zn_{0.2}Al_{0.32}(OH)₂(CO₃)_{0.16}
Mg_{0.5}Zn_{0.17}Al_{0.33}(OH)₂(CO₃)_{0.165}·0.45H₂O
Mg_{0.5}Zn_{0.18}Al_{0.32}(OH)₂(CO₃)_{0.16}
Mg_{0.5}Zn_{0.2}Al_{0.3}(OH)₂(CO₃)_{0.16}
Mg_{0.5}Zn_{0.2}Al_{0.3}(OH)₂(CO₃)_{0.15}·0.52H₂O
Mg_{0.5}Zn_{0.25}Al_{0.25}(OH)₂(CO₃)_{0.125}
Mg_{0.51}Zn_{0.17}Al_{0.32}(OH)₂(CO₃)_{0.16}
Mg_{0.52}Zn_{0.16}Al_{0.32}(OH)₂(CO₃)_{0.16}·0.5H₂O
Mg_{0.55}Zn_{0.15}Al_{0.32}(OH)₂(CO₃)_{0.15}
Mg_{0.6}Zn_{0.14}Al_{0.26}(OH)₂(CO₃)_{0.13}
Mg_{0.6}Zn_{0.16}Al_{0.24}(OH)₂(CO₃)_{0.12}
Mg_{0.6}Zn_{0.2}Al_{0.2}(OH)₂(CO₃)_{0.1}
Mg_{0.4}Ca_{0.1}Zn_{0.18}Al_{0.32}(OH)₂(CO₃)_{0.16}
Mg_{0.3}Ca_{0.2}Zn_{0.2}Al_{0.3}(OH)₂(CO₃)_{0.15}
Mg_{0.5}Zn_{0.17}Al_{0.33}(OH)₂(CO₃)_{0.17}·0.5H₂O
Mg_{0.5}Zn_{0.17}Al_{0.33}(OH)₂(CO₃)_{0.17}·0.42H₂O
Mg_{0.6}Zn_{0.16}Al_{0.24}(OH)₂(CO₃)_{0.12}·0.45H₂O
Mg_{0.5}Zn_{0.25}Al_{0.25}(OH)₂(CO₃)_{0.13}·0.39H₂O
Mg_{0.5}Zn_{0.17}Al_{0.33}(OH)₂(CO₃)_{0.17}
Mg_{0.5}Zn_{0.25}Al_{0.25}(OH)₂(CO₃)_{0.13}
Mg_{3/6}Zn_{1/6}Al_{2/6}(OH)₂(CO₃)_{1/6}·0.5H₂O
Mg_{3/6}Zn_{1/6}Al_{2/6}(OH)₂(CO₃)_{1/6}
Mg_{3.0}ZnAl₂(OH)₁₂(CO₃)·3H₂O.

Examples of a commercially available product include ALCAMIZER 4 (ALCAMIZER P-93) and ALCAMIZER 7 (products manufactured by Kyowa Chemical Industries Co., Ltd.). It is preferable to use ALCAMIZER 4 (ALCAMIZER P-93) in terms of thermal resistance and coloration resistance, as well as transparency in a case of being blended into the vinyl chloride-based resin composition to be used in transparent products.

The refractive index of the zinc-modified hydrotalcite compound is preferably 1.52 to 1.56 in terms of transparency.

In the present invention, the hydrotalcite compounds may be used alone or in combination of two or more.

In the present invention, the hydrotalcite compound may also be coated with a higher fatty acid such as stearic acid, a metal salt of a higher fatty acid such as an alkali metal oleate, a metal salt of an organic sulfonic acid such as an alkali metal dodecylbenzenesulfonate, a higher fatty acid amide, a higher fatty acid ester, wax, or the like. A hydrotalcite compound from which crystal water has been removed may also be used.

The content of the hydrotalcite compound serving as the component (D) in the vinyl chloride-based resin composition of the present invention is preferably 0.01 to 10.0 parts by mass with respect to 100 parts by mass of the vinyl chloride-based resin in terms of thermal stability and coloration resistance, and more preferably 0.1 to 6.0 parts by mass and even more preferably 0.5 to 4.0 parts by mass. When the content thereof is smaller than 0.01 parts by mass, the thermal stability is insufficient, and when the content thereof exceeds 10.0 parts by mass, the coloration resistance may decrease.

An organic acid calcium salt may be further blended into the vinyl chloride-based resin composition of the present invention in terms of thermal stability and coloration resistance. Examples of the organic acid calcium salt include calcium salts of organic carboxylic acids, phenols, and organic phosphoric acids.

Examples of the organic carboxylic acid include: monovalent carboxylic acids such as acetic acid, propionic acid, butyric acid, valeric acid, caproic acid, enanthic acid, caprylic acid, pelargonic acid, 2-ethylhexylic acid, neodecanoic acid, capric acid, undecanoic acid, lauric acid, tridecanoic acid, myristic acid, palmitic acid, isostearic acid, stearic acid, 12-hydroxystearic acid, behenic acid, montanic acid, benzoic acid, monochlorobenzoic acid, p-tertiary-butylbenzoic acid, dimethylhydroxybenzoic acid, 3,5-di-tertiary-butyl-4-hydroxybenzoic acid, toluic acid, dimethylbenzoic acid, ethylbenzoic acid, cumic acid, n-propylbenzoic acid, aminobenzoic acid, N,N-dimethylaminobenzoic acid, acetoxybenzoic acid, salicylic acid, p-tertiary-octylsalicylic acid, elaidic acid, oleic acid, linoleic acid, linolenic acid, thioglycollic acid, mercaptopropionic acid, and octylmercaptopropionic acid; divalent carboxylic acids such as oxalic acid, malonic acid, succinic acid, glutaric acid, adipic acid, pimelic acid, suberic acid, azelaic acid, sebacic acid, phthalic acid, isophthalic acid, terephthalic acid, hydroxyphthalic acid, chlorophthalic acid, aminophthalic acid, maleic acid, fumaric acid, citraconic acid, mesaconic acid, itaconic acid, aconitic acid, and thiodipropionic acid, or monoester or mono amide compounds thereof; and diester or triester compounds of trivalent or tetravalent carboxylic acids such as butanetricarboxylic acid, butanetetracarboxylic acid, hemimellitic acid, trimellitic acid, mellophanic acid, and pyromellitic acid.

Examples of the phenols include tertiary-butylphenol, nonylphenol, dinonylphenol, cyclohexylphenol, phenylphenol, octylphenol, phenol, cresol, xylenol, n-butylphenol, isoamylphenol, ethylphenol, isopropylphenol, isooctylphenol, 2-ethylhexylphenol, tertiary-nonylphenol, decylphenol, tertiary-octylphenol, isohexylphenol, octadecylphenol, di-isobutylphenol, methylpropylphenol, diamylphenol, methylisohexylphenol, and methyl-tertiary-octylphenol.

Examples of the organic phosphoric acids include mono- or di-octylphosphoric acid, mono- or di-dodecyl phosphoric acid, mono- or di-octadecylphosphoric acid, mono- or di-(nonylphenyl)phosphoric acid, nonylphenyl phosphonate, and stearyl phosphonate.

The organic acid calcium salt of the present invention may be an acid salt, a neutral salt, a basic salt, or an overbased complex obtained by neutralizing a portion or all of the bases in a basic salt with carbonic acid.

The organic acid calcium salts may be used alone or in combination of two or more.

In the present invention, it is particularly preferable to use a calcium salt of an organic carboxylic acid as the organic acid calcium salt in terms of thermal stability and coloration resistance.

When the organic acid calcium salt is blended into the vinyl chloride-based resin composition of the present invention, the mass ratio thereof with respect to the organic acid zinc salt serving as the component (A) (organic acid calcium salt/organic acid zinc salt) is preferably 0.1 to 2.0, and more preferably 0.2 to 1.5. It should be noted that it is preferable to use only the organic acid zinc salt when the vinyl chloride-based resin composition is to be used in transparent products.

An organic acid barium salt may be further blended into the vinyl chloride-based resin composition of the present invention. Examples of the organic acid barium salt include barium salts of organic carboxylic acids, phenols, and organic phosphoric acids.

Examples of the organic carboxylic acid include: monovalent carboxylic acids such as acetic acid, propionic acid, butyric acid, valeric acid, caproic acid, enanthic acid, caprylic acid, pelargonic acid, 2-ethylhexylic acid, neodecanoic acid, capric acid, undecanoic acid, lauric acid, tridecanoic acid, myristic acid, palmitic acid, isostearic acid, stearic acid, 12-hydroxystearic acid, behenic acid, montanic acid, benzoic acid, monochlorobenzoic acid, p-tertiary-butylbenzoic acid, dimethylhydroxybenzoic acid, 3,5-di-tertiary-butyl-4-hydroxybenzoic acid, toluic acid, dimethylbenzoic acid, ethylbenzoic acid, cumic acid, n-propylbenzoic acid, aminobenzoic acid, N,N-dimethylaminobenzoic acid, acetoxybenzoic acid, salicylic acid, p-tertiary-octylsalicylic acid, elaidic acid, oleic acid, linoleic acid, linolenic acid, thioglycollic acid, mercaptopropionic acid, and octylmercaptopropionic acid; divalent carboxylic acids such as oxalic acid, malonic acid, succinic acid, glutaric acid, adipic acid, pimelic acid, suberic acid, azelaic acid, sebacic acid, phthalic acid, isophthalic acid, terephthalic acid, hydroxyphthalic acid, chlorophthalic acid, aminophthalic acid, maleic acid, fumaric acid, citraconic acid, mesaconic acid, itaconic acid, aconitic acid, and thiodipropionic acid, or monoester or monoamide compounds thereof; and diester or triester compounds of trivalent or tetravalent carboxylic acids such as butanetricarboxylic acid, butanetetracarboxylic acid, hemimellitic acid, trimellitic acid, mellophanic acid, and pyromellitic acid.

Examples of the phenols include tertiary-butylphenol, nonylphenol, dinonylphenol, cyclohexylphenol, phenylphenol, octylphenol, phenol, cresol, xylenol, n-butylphenol, isoamylphenol, ethylphenol, isopropylphenol, isooctylphenol, 2-ethylhexylphenol, tertiary-nonylphenol, decylphenol, tertiary-octylphenol, isohexylphenol, octadecylphenol, di-isobutylphenol, methylpropylphenol, diamylphenol, methylisohexylphenol, and methyl-tertiary-octylphenol.

Examples of the organic phosphoric acids include mono- or di-octylphosphoric acid, mono- or di-dodecyl phosphoric acid, mono- or di-octadecylphosphoric acid, mono- or di-(nonylphenyl)phosphoric acid, nonylphenyl phosphonate, and stearyl phosphonate.

The organic acid barium salt of the present invention may be an acid salt, a neutral salt, a basic salt, or an overbased complex obtained by neutralizing a portion or all of the bases in a basic salt with carbonic acid.

The organic acid barium salts may be used alone or in combination of two or more.

In the present invention, out of the organic acid barium salts, a barium salt of an organic carboxylic acid is preferable in terms of thermal stability and coloration resistance.

The organic barium salt can be blended into the vinyl chloride-based resin composition of the present invention in terms of thermal stability and coloration resistance, but when the vinyl chloride-based resin composition of the present invention is used in an application where the influence of a barium salt on the human body or the environment should be taken into consideration, it is preferable to not blend the organic acid barium salt but the organic acid calcium salt.

When the organic acid barium salt is blended into the vinyl chloride-based resin composition of the present invention, the mass ratio thereof with respect to the organic acid zinc salt serving as the component (A) (organic acid barium salt/organic acid zinc salt) is preferably 0.1 to 2.0, and more preferably 0.2 to 1.5. It should be noted that it is preferable to use only the organic acid zinc salt when the vinyl chloride-based resin composition is to be used in transparent products.

An organic acid magnesium salt may be further blended into the vinyl chloride-based resin composition of the present invention. Examples of the organic acid magnesium salt include magnesium salts of organic carboxylic acids, phenols, and organic phosphoric acids.

Examples of the organic carboxylic acid include: monovalent carboxylic acids such as acetic acid, propionic acid, butyric acid, valeric acid, caproic acid, enanthic acid, caprylic acid, pelargonic acid, 2-ethylhexylic acid, neodecanoic acid, capric acid, undecanoic acid, lauric acid, tridecanoic acid, myristic acid, palmitic acid, isostearic acid, stearic acid, 12-hydroxystearic acid, behenic acid, montanic acid, benzoic acid, monochlorobenzoic acid, p-tertiary-butylbenzoic acid, dimethylhydroxybenzoic acid, 3,5-di-tertiary-butyl-4-hydroxybenzoic acid, toluic acid, dimethylbenzoic acid, ethylbenzoic acid, cumic acid, n-propylbenzoic acid, aminobenzoic acid, N,N-dimethylaminobenzoic acid, acetoxybenzoic acid, salicylic acid, p-tertiary-octylsalicylic acid, elaidic acid, oleic acid, linoleic acid, linolenic acid, thioglycollic acid, mercaptopropionic acid, and octylmercaptopropionic acid; divalent carboxylic acids such as oxalic acid, malonic acid, succinic acid, glutaric acid, adipic acid, pimelic acid, suberic acid, azelaic acid, sebacic acid, phthalic acid, isophthalic acid, terephthalic acid, hydroxyphthalic acid, chlorophthalic acid, aminophthalic acid, maleic acid, fumaric acid, citraconic acid, mesaconic acid, itaconic acid, aconitic acid, and thiodipropionic acid, or monoester or monoamide compounds thereof; and diester or triester compounds of trivalent or tetravalent carboxylic acids such as butanetricarboxylic acid, butanetetracarboxylic acid, hemimellitic acid, trimellitic acid, mellophanic acid, and pyromellitic acid.

Examples of the phenols include tertiary-butylphenol, nonylphenol, dinonylphenol, cyclohexylphenol, phenylphenol, octylphenol, phenol, cresol, xylenol, n-butylphenol, isoamylphenol, ethylphenol, isopropylphenol, isooctylphenol, 2-ethylhexylphenol, tertiary-nonylphenol, decylphenol, tertiary-octylphenol, isohexylphenol, octadecylphenol, di-isobutylphenol, methylpropylphenol, diamylphenol, methylisohexylphenol, and methyl-tertiary-octylphenol.

Examples of the organic phosphoric acids include mono- or di-octylphosphoric acid, mono- or di-dodecyl phosphoric acid, mono- or di-octadecylphosphoric acid, mono- or di-(nonylphenyl)phosphoric acid, nonylphenyl phosphonate, and stearyl phosphonate.

The organic acid magnesium salt of the present invention may be an acid salt, a neutral salt, a basic salt, or an overbased complex obtained by neutralizing a portion or all of the bases in a basic salt with carbonic acid.

The organic acid magnesium salts may be used alone or in combination of two or more.

In the present invention, out of the organic acid magnesium salts, a magnesium salt of an organic carboxylic acid is preferable in terms of thermal stability and coloration resistance.

When the organic acid magnesium salt is blended into the vinyl chloride-based resin composition of the present invention, the mass ratio thereof with respect to the organic acid zinc salt serving as the component (A) (organic acid magnesium salt/organic acid zinc salt) is preferably 0.1 to 2.0, and more preferably 0.2 to 1.5. It should be noted that it is preferable to use only the organic acid zinc salt when the vinyl chloride-based resin composition is to be used in transparent products.

It is preferable to further blend a phenol-based antioxidant into the vinyl chloride-based resin composition of the present invention.

Examples of the phenol-based antioxidant to be used in the present invention include 2,6-di-tertiary-butyl-p-cresol, 2,6-diphenyl-4-octadecyloxyphenol, stearyl(3,5-di-tertiary-butyl-4-hydroxyphenyl)-propionate, distearyl(3,5-di-tertiary-butyl-4-hydroxybenzyl) phosphonate, thiodiethylene glycol bis[(3,5-di-tertiary-butyl-4-hydroxyphenyl) propionate], 1,6-hexamethylenebis[(3,5-di-tertiary-butyl-4-hydroxyphenyl)propionate], 1,6-hexamethylenebis[(3,5-di-tertiary-butyl-4-hydroxyphenyl)propionic acid amide], 4,4'-thiobis(6-tertiary-butyl-m-cresol), 2,2'-methylenebis(4-methyl-6-tertiary-butylphenol), 2,2'-methylenebis(4-ethyl-6-tertiary-butylphenol), bis[3,3-bis(4-hydroxy-3-tertiary-butylphenyl)butylic acid]glycol ester, 4,4'-butylidenebis(6-tertiary-butyl-m-cresol), 2,2'-ethylidenebis(4,6-di-tertiary-butylphenol), 2,2'-ethylidenebis(4-secondary-butyl-6-tertiary-butylphenol), 1,1,3-tris(2-methyl-4-hydroxy-5-tertiary-butylphenyl)butane, bis[2-tertiary-butyl-4-methyl-6-(2-hydroxy-3-tertiary-butyl-5-methylbenzyl)phenyl] terephthalate, 1,3,5-tris(2,6-dimethyl-3-hydroxy-4-tertiary-butylbenzyl) isocyanurate, 1,3,5-tris(3,5-di-tertiary-butyl-4-hydroxybenzyl) isocyanurate, 1,3,5-tris(3,5-di-tertiary-butyl-4-hydroxybenzyl)-2,4,6-trimethylbenzene, 1,3,5-tris[(3,5-di-tertiary-butyl-4-hydroxyphenyl)propionyloxyethyl]isocyanurate, tetrakis[methylene-3-(3',5'-di-tertiary-butyl-4'-hydroxyphenyl)propionate]methane, 2-tertiary-butyl-4-methyl-6-(2-acryloyloxy-3-tertiary-butyl-5-methylbenzyl)phenol, 3,9-bis[1,1-dimethyl-2-{(3-tertiary-butyl-4-hydroxy-5-methylphenyl)propionyloxy}ethyl] -2,4,8,10-tetraoxaspiro[5.5]undecane, and triethylene glycol bis[(3-tertiary-butyl-4-hydroxy-5-methylphenyl) propionate]. These phenol-based antioxidants may be used alone or in combination of two or more.

The content of the phenol-based antioxidant in the vinyl chloride-based resin composition of the present invention is preferably 0.01 to 5.0 parts by mass with respect to 100 parts by mass of the vinyl chloride-based resin, more preferably 0.03 to 3.0 parts by mass, and even more preferably 0.05 to 1.0 part by mass, in terms of thermal stability and coloration resistance.

The addition of a lead-based stabilizer, a (organic) tin-based stabilizer, and a cadmium-based stabilizer, out of metal-based stabilizers to be used in a vinyl chloride-based resin, to the vinyl chloride-based resin composition of the present invention is not preferable in terms of the influence on the environment and toxicity.

The vinyl chloride-based resin composition of the present invention can be used in hard products without a plasticizer being blended thereinto, or can be used in semi-hard products with a small amount of a plasticizer being blended thereinto, that is, a plasticizer being blended thereinto in an amount of 30 parts by mass or less with respect to 100 parts by mass of the vinyl chloride-based resin, for example, or can be used in soft products with a plasticizer being blended thereinto in an amount of more than 30 parts by mass with respect to 100 parts by mass of the vinyl chloride-based resin.

Examples of the plasticizer include: phthalate-based plasticizers such as dibutyl phthalate, butylhexyl phthalate, diheptyl phthalate, dioctyl phthalate, diisononyl phthalate, diisodecyl phthalate, dilauryl phthalate, dicyclohexyl phthalate, and dioctyl terephthalate; adipate-based plasticizers such as dioctyl adipate, diisononyl adipate, diisodecyl adipate, and di(butyldiglycol) adipate; phosphate-based plasticizers such as triphenyl phosphate, tricresyl phosphate, trixylenyl phosphate, tri(isopropylphenyl) phosphate, triethyl phosphate, tributyl phosphate, trioctyl phosphate, tri(butoxyethyl) phosphate, and octyldiphenyl phosphate; and polyester-based plasticizers using a polyhydric alcohol such as ethylene glycol, diethylene glycol, triethylene glycol, 1,2-propylene glycol, 1,3-propylene glycol, 1,3-butanediol, 1,4-butanediol, 1,5-hexanediol, 1,6-hexanediol, or neopentyl glycol, and a dibasic acid such as oxalic acid, malonic acid, succinic acid, glutaric acid, adipic acid, pimelic acid, suberic acid, azelaic acid, sebacic acid, phthalic acid, isophthalic acid, or terephthalic acid, and optionally a monohydric alcohol and a monocarboxylic acid as stoppers; and in addition, tetrahydrophthalic acid-based plasticizers, azelaic acid-based plasticizers, sebacic acid-based plasticizers, stearic acid-based plasticizers, citric acid-based plasticizers, trimellitic acid-based plasticizers, pyromellitic acid-based plasticizers, and biphenylenepolycarboxylic acid-based plasticizers.

In addition to the components (A) to (C), which are essential components, the component (D), which is a preferred blend component, and the components that may be blended, a lubricant, a phosphorus-based antioxidant, a sulfur-based antioxidant, a processing aid, a polyhydric alcohol compound, an epoxy compound, an ultraviolet absorber other than the triazine-based compounds represented by Formula (1), a light stabilizer such as a hindered amine-based light stabilizer, an impact resistance improving agent, a filler, a flame retardant, a flame retardant aid, a zeolite compound, a perchlorate, a foaming agent, and the like can be blended, as optional components, into the vinyl chloride-based resin composition of the present invention as long as the effects of the present invention are not impaired.

Examples of the lubricant include: hydrocarbon-based lubricants such as small-molecular wax, paraffin wax, polyethylene wax, chlorinated hydrocarbons, and fluorocarbon; natural wax-based lubricants such as carnauba wax and candelilla wax; fatty acid-based lubricants including higher fatty acids such as lauric acid, stearic acid, and behenic acid, hydroxyfatty acids such as hydroxystearic acid, and the like; aliphatic amide-based lubricants including aliphatic amide compounds such as stearylamide, laurylamide, and oleylamide, alkylenebis aliphatic amides such as methylenebisstearylamide and ethylenebisstearylamide, and the like; fatty acid-alcohol ester-based lubricants including fatty acid-monohydric alcohol ester compounds such as stearyl stearate, butyl stearate, and distearyl phthalate, fatty acid-polyhydric alcohol ester compounds such as glycerin tristearate, sorbitan tristearate, pentaerythritol tetrastearate, dipentaerythritol hexastearate, polyglycerin polyricinoleate, and hydrogenated castor oil, composite ester compounds formed through a reaction of a monovalent fatty acid and a polybasic organic acid with a polyhydric alcohol such as adipic acid-stearic acid ester of dipentaerythritol, and the like; aliphatic alcohol-based lubricants such as stearyl alcohol, lauryl alcohol, and palmityl alcohol; metal soaps; montanic acid-based lubricants such as partially saponified montanic acid ester; acryl-based lubricants; and silicone oil. These lubricants may be used alone or in combination of two or more.

In the present invention, it is preferable to use a fatty acid-alcohol ester-based lubricant such as a composite ester compound formed through a reaction of a monovalent fatty acid and a polybasic organic acid with a polyhydric alcohol, particularly when the vinyl chloride-based resin is to be used in transparent products.

The lubricant is preferably used in an amount of 0.01 to 5.0 parts by mass with respect to 100 parts by mass of the vinyl chloride-based resin, and more preferably in an amount of 0.05 to 3.0 parts by mass and even more preferably in an amount of 0.1 to 2.0 parts by mass in terms of processability.

Examples of the phosphorus-based antioxidant include triphenyl phosphite, tris(2,4-di-tertiary-butylphenyl) phosphite, tris(nonylphenyl) phosphite, tris(dinonylphenyl) phosphite, tris(mono-, di- mixed nonylphenyl) phosphite, bis(2-tertiary-butyl-4,6-dimethylphenyl)-ethyl phosphite, diphenyl acid phosphite, 2,2'-methylenebis(4,6-di-tertiary-butylphenyl)octyl phosphite, diphenyldecyl phosphite, phenyldiisodecyl phosphite, tributyl phosphite, tris(2-ethylhexyl) phosphite, tridecyl phosphite, trilauryl phosphite, dibutyl acid phosphite, dilauryl acid phosphite, trilauryltrithio phosphite, bis(neopentyl glycol)-1,4-cyclohexanedimethyl diphosphite, bis(2,4-di-tertiary-butylphenyl)pentaerythritol diphosphite, bis(2,6-di-tertiary-butyl-4-methylphenyl)pentaerythritol diphosphite, distearylpentaerythritol diphosphite, tetra(C12-15 mixed alkyl)-4,4 '-isopropylidenediphenyl phosphite, bis[2,2'-methylenebis(4,6-diamylphenyl)]-isopropylidenediphenyl phosphite, hydrogenated-4,4 '-isopropylidenediphenol polyphosphite, tetratridecyl[4,4'-butylidenebis(2-tertiary-butyl-5-methylphenol)] diphosphite, hexakis(tridecyl)-1,1,3-tris(2'-methyl-5'-tertiary-butyl-4'-hydroxyphenyl)butane triphosphite, 9,10-dihydro-9-oxa-10-phosphaphenanthrene-10-oxide, and 2-butyl-2-ethylpropanediol-2,4,6-tri-tertiary-butylphenol monophosphite.

These phosphorus-based antioxidants may be used alone or in combination of two or more.

The phosphorus-based antioxidant is preferably used in an amount of 0.01 to 5.0 parts by mass with respect to 100 parts by mass of the vinyl chloride-based resin in terms of thermal stability and coloration resistance, and more preferably in an amount of 0.03 to 3.0 parts by mass and even more preferably in an amount of 0.05 to 2.0 parts by mass.

Examples of the sulfur-based antioxidant include dialkyl thiodipropionates such as dilauryl thiodipropionate, dimyristyl thiodipropionate, and distearyl thiodipropionate, and pentaerythritoltetra(β-alkylthiopropionic acid) esters.

The sulfur-based antioxidant is preferably used in an amount of 0.01 to 5.0 parts by mass with respect to 100 parts by mass of the vinyl chloride-based resin in terms of thermal stability and coloration resistance, and more preferably in an amount of 0.03 to 3.0 parts by mass and even more preferably in an amount of 0.05 to 1.0 part by mass.

Although the processing aid can be selected from known processing aids as appropriate, acrylic acid-based processing aids are preferable. Examples of the processing aid include: homopolymers or copolymers of alkyl methacrylates such as methyl methacrylate, ethyl methacrylate, and butyl methacrylate; copolymers of the alkyl methacrylates and alkyl acrylates such as methyl acrylate, ethyl acrylate, and butyl acrylate; copolymers of the alkyl methacrylates and aromatic vinyl compounds such as styrene, α-methylstyrene, and vinyltoluene; and copolymers of the alkyl methacrylates and vinylcyan compounds such as acrylonitrile and methacrylonitrile. These processing aids may be used alone or in combination of two or more.

The processing aid is preferably used in an amount of 0.01 to 10 parts by mass with respect to 100 parts by mass of the vinyl chloride-based resin, and more preferably in an amount of 0.05 to 5 parts by mass.

Examples of the polyhydric alcohol compounds include pentaerythritol, dipentaerythritol, tripentaerythritol, polypentaerythritol, neopentyl glycol, trimethylolpropane, ditrimethylolpropane, 1,3,5-tris(2-hydroxyethyl) isocyanurate, polyethylene glycol, glycerin, diglycerin, mannitol, maltitol, lactitol, sorbitol, erythritol, xylitol, xylose, sucrose, trehalose, inositol, fructose, maltose, and lactose. These may be used in combination of two or more.

The polyhydric alcohol compound is preferably used in an amount of 0.001 to 5.0 parts by mass with respect to 100 parts by mass of the vinyl chloride-based resin, more preferably in an amount of 0.005 to 3.0 parts by mass, and even more preferably in an amount of 0.01 to 2.0 parts by mass, in terms of thermal stability and coloration resistance as well as transparency in a case where the vinyl chloride-based resin is to be used in transparent products.

Examples of the epoxy compound include: epoxidized animal oils and epoxidized plant oils such as epoxidized soybean oil, epoxidized linseed oil, epoxidized tung oil, epoxidized fish oil, epoxidized beef tallow oil, epoxidized castor oil, and epoxidized safflower oil; and epoxy compounds such as epoxidized methyl stearate, epoxidized butyl stearate, epoxidized 2-ethylhexyl stearate, epoxidized stearic acid stearyl ester, epoxidized polybutadiene, tris(epoxypropyl) isocyanurate, epoxidized tall oil fatty acid ester, epoxidized linseed oil fatty acid ester, bisphenol A diglycidyl ether, vinylcyclohexene diepoxide, dicyclohexene diepoxide, 3,4-epoxycyclohexylmethyl, and epoxycyclohexane carboxylate.

Examples of the ultraviolet absorber other than the triazine-based compounds represented by Formula (1) include: 2-hydroxybenzophenones such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2-hydroxyphenyl)benzotriazoles such as 2-(2-hydroxy-5-methylphenyl)benzotriazole, 2-(2-hydroxy-5-tertiary-octylphenyl)benzotriazole, 2-(2-hydroxy-3,5-di-tertiary-butylphenyl)-5-chlorobenzotriazole, 2-(2-hydroxy-3-tertiary-butyl-5-methylphenyl)-5-chlorobenzotriazole, 2-(2-hydroxy-3,5-dicumylphenyl)benzotriazole, 2,2'-methylenebis(4-tertiary-octyl-6-benzotriazolyl)phenol, and polyethyleneglycol ester of 2-(2-hydroxy-3-tertiary-butyl-5-carboxyphenyl)benzotriazole; benzoates such as phenyl salicylate, resorcinol monobenzoate, 2,4-di-tertiary-butylphenyl-3,5-di-tertiary-butyl-4-hydroxybenzoate, and hexadecyl-3,5-di-tertiary-butyl-4-hydroxybenzoate; substituted oxanilides such as 2-ethyl-2'-ethoxyoxanilide and 2-ethoxy-4'-dodecyloxanilide; cyanoacrylates such as ethyl-α-cyano-β,β-diphenyl acrylate and methyl-2-cyano-3-methyl-3-(p-methoxyphenyl) acrylate; and triaryltriazines such as 2-(2-hydroxy-4-octoxyphenyl)-4,6-bis(2,4-dimethylphenyl)-s-triazine, 2-(2-hydroxy-4-hexyloxyphenyl)-4,6-diphenyl-s-triazine, 2-(2-hydroxy-4-propoxy-5-methylphenyl)-4,6-bis(2,4-dimethylphenyl)-s-triazine, 2-(2-hydroxy-4-hexyloxyphenyl)-4,6-dibiphenyl-s-triazine, 2,4-bis(2-hydroxy-4-octoxyphenyl)-6-(2,4-dimethylphenyl)-s-triazine, 2,4,6-tris(2-hydroxy-4-octoxyphenyl)-s-triazine, and 2-(4-isooctyloxycarbonylethoxyphenyl)-4,6-diphenyl-s-triazine.

Examples of the hindered amine-based light stabilizer include hindered amine compounds such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis(1,2,2,6,6-pentamethyl-4-piperidyl) sebacate, tetrakis(2,2,6,6-tetramethyl-4-piperidyl)butane tetracarboxylate, tetrakis(1,2,2,6,6-pentamethyl-4-piperidyl)butane tetracarboxylate, bis(1,2,2,6,6-pentamethyl-4-piperidyl)-di(tridecyl)-1,2,3,4-butane tetracarboxylate, bis(1,2,2,6,6-pentamethyl-4-piperidyl)-2-butyl-2-(3,5-di-tertiary-butyl-4-hydroxybenzyl) malonate, 1-(2-hydroxyethyl)-2,2,6,6-tetramethyl-4-piperidinol/diethyl succinate polycondensate, 1,6-bis(2,2,6,6-tetraethyl-4-piperidylamino)hexane/dibromoethane polycondensate, 1,6-bis(2,2,6,6-tetramethyl-4-piperidylamino)hexane/2,4-dichloro-6-morpholino-s-triazin e polycondensate, 1,6-bis(2,2,6,6-tetramethyl-4-piperidylamino)hexane/2,4-dichloro-6-tertiary-octylamino-s -triazine polycondensate, 1,5,8,12-tetrakis[2,4-bis(N-butyl-N-(2,2,6,6-tetramethyl-4-piperidyl)amino)-s-triazin-6-yl ]-1,5,8,12-tetraazadodecane, 1,5,8,12-tetrakis[2,4-bis(N-butyl-N-(1,2,2,6,6-pentamethyl-4-piperidyl)amino)-s-triazin-6 -yl]-1,5,8,12-tetraazadodecane, 1,6,11-tris[2,4-bis(N-butyl-N-(2,2,6,6-tetramethyl-4-piperidyl)amino)-s-triazin-6-ylamino ]undecane, and 1,6,11-tris[2,4-bis(N-butyl-N-(1,2,2,6,6-pentamethyl-4-piperidyl)amino)-s-triazin-6-ylami no]undecane.

Examples of the impact resistance improving agent include polybutadiene, polyisoprene, polychloroprene, fluoro rubber, styrene-butadiene-based copolymer rubber, methyl methacrylate-butadiene-styrene-based copolymer, methyl methacrylate-butadiene-styrene-based graft copolymer, acrylonitrile-styrene-butadiene-based copolymer rubber, acrylonitrile-styrene-butadiene-based graft copolymer, styrene-butadiene-styrene block copolymer rubber, styrene-isoprene-styrene copolymer rubber, styrene-ethylene-butylene-styrene copolymer rubber, ethylene-propylene copolymer rubber, ethylene-propylene-diene copolymer rubber (EPDM), silicone-containing acryl-based rubber, silicone/acryl composite rubber-based graft copolymer, and silicone-based rubber. It should be noted that examples of the diene in the ethylene-propylene-diene copolymer rubber (EPDM) include 1,4-hexanediene, dicyclopentadiene, methylenenorbornene, ethylidenenorbornene, and propenylnorbornene.

Specific examples of the filler include calcium carbonate, calcium oxide, calcium hydroxide, zinc hydroxide, zinc carbonate, zinc sulfide, magnesium oxide, magnesium hydroxide, magnesium carbonate, aluminum oxide, aluminum hydroxide, metal silicate salts such as sodium aluminasilicate, hydrocalumite, aluminum silicate, magnesium silicate, calcium silicate, and zeolite, activated clay, talc, clay, red iron oxide, asbestos, antimonous oxide, silica, glass beads, mica, sericite, glass flakes, wollastonite, potassium titanate, PMF, gypsum fibers, zonolite, MOS, phosphate fibers, glass fibers, carbon fibers, and aramid fibers.

Examples of the flame retardant and flame retardant aid include triazine ring-containing compounds, metal hydroxides, other inorganic phosphorus, halogen-based flame retardants, silicone-based flame retardants, phosphoric acid ester-based flame retardants, condensed phosphoric acid ester-based flame retardants, intumescent flame retardants, antimony oxides such as antimonous oxide, and other inorganic flame retardant aids and organic flame retardant aids.

Examples of the triazine ring-containing compound include melamine, ammeline, benzoguanamine, acetoguanamine, phthalodiguanamine, melamine cyanurate, melamine pyrophosphate, butylenediguanamine, norbornenediguanamine, methylenediguanamine, ethylenedimelamine, trimethylenedimelamine, tetramethylenedimelamine, hexamethylenedimelamine, and 1,3-hexylenedimelamine.

Examples of the metal hydroxide include magnesium hydroxide, aluminum hydroxide, calcium hydroxide, barium hydroxide, zinc hydroxide, and KISUMA 5A (magnesium hydroxide: manufactured by Kyowa Chemical Industries Co., Ltd.).

Examples of the phosphoric acid ester-based flame retardant include trimethyl phosphate, triethyl phosphate, tributyl phosphate, tributoxyethyl phosphate, trischloroethyl phosphate, trisdichloropropyl phosphate, triphenyl phosphate, tricresyl phosphate, cresyldiphenyl phosphate, trixylenyl phosphate, octyldiphenyl phosphate, xylenyldiphenyl phosphate, trisisopropylphenyl phosphate, 2-ethylhexyldiphenyl phosphate, t-butylphenyldiphenyl phosphate, bis-(t-butylphenyl)phenyl phosphate, tris-(t-butylphenyl) phosphate, isopropylphenyldiphenyl phosphate, bis-(isopropylphenyl)diphenyl phosphate, and tris-(isopropylphenyl) phosphate.

Examples of the condensed phosphoric acid ester-based flame retardant include 1,3-phenylenebis(diphenyl phosphate), 1,3-phenylenebis(dixylenyl phosphate), and bisphenol A bis(diphenyl phosphate), and examples of the intumescent flame retardant include ammonium salts and amine salts of polyphosphoric acid such as ammonium polyphosphate, melamine polyphosphate, piperazine polyphosphate, ammonium pyrophosphate, melamine pyrophosphate, and piperazine pyrophosphate.

Examples of the other inorganic flame retardant aids include inorganic compounds such as titanium oxide, aluminum oxide, magnesium oxide, and talc, and surface-treated products thereof, and various commercially available products such as TIPAQUE R-680 (titanium oxide: manufactured by Ishihara Sangyo Kaisha Ltd.) and KYOWAMAG 150 (magnesium oxide: manufactured by Kyowa Chemical Industries Co., Ltd.) can be used, for example.

Examples of the other organic flame retardant aids include pentaerythritol and dipentaerythritol.

The zeolite compound is an aluminosilicate of an alkali metal or an alkali earth metal having a unique three-dimensional zeolite crystal structure. Typical examples thereof include A-type zeolite, X-type zeolite, Y-type zeolite, P-type zeolite, mordenite, analcite, sodalite-group aluminosilicates, clinoptilolite, erionite, and chabazite. These zeolite compounds may be hydrate compounds containing crystal water (i.e., zeolite water) or anhydrides from which crystal water has been removed. The zeolite compounds having a particle diameter of 0.1 to 50 µm can be used, and the zeolite compounds having a particle diameter of 0.5 to 10 µm are particularly preferable.

Examples of the perchlorate include metal perchlorates, ammonium perchlorate, and perchloric acid treated silicate. Examples of the metals included in the metal salts include lithium, sodium, potassium, calcium, magnesium, strontium, barium, zinc, cadmium, lead, and aluminum. The metal perchlorates may be anhydrides or hydrate salts. The metal perchlorates may also be those dissolved in an alcohol-based or ester-based solvent such as butyl diglycol or butyl diglycol adipate, and dehydrated products thereof.

Examples of the foaming agent include: decomposition-type organic foaming agents such as azodicarbonamide, azobisisobutyronitrile, p,p'-oxybisbenzenesulfonylhydrazide, n,n'-dinitrosopentamethylenetetramine, p-toluenesulfonylsemicarbazide, and trihydrazotriazine; and decomposition-type inorganic foaming agents such as sodium bicarbonate, ammonium carbonate, ammonium bicarbonate, ammonium nitrite, azide compounds, and sodium borohydride.

Furthermore, examples of the optional components include stabilizing aids that are generally used in a vinyl chloride-based resin, and the stabilizing aids can be added to the vinyl chloride-based resin as long as the effects of the present invention are not impaired. Examples of the stabilizing aids include diphenylthiourea, anilinodithiotriazine, melamine, benzoic acid, cinnamic acid, p-tertiary-butylbenzoic acid, zeolite, and perchlorates.

In addition, additives that are generally used in a vinyl chloride-based resin, such as a cross-linking agent, an antistatic agent, an antifogging agent, a plate-out preventing agent, a surface-treating agent, a fluorescent agent, an antifungal agent, an antiseptic agent, a metal deactivator, a mold release agent, pigments such as white pigments including titanium dioxide and the like and blue pigments including ultramarine blue, phthalocyanine blue, and the like, can be blended into a stabilizer composition for the vinyl chloride-based resin of the present invention or a resin composition for vinyl chloride as long as the effects of the present invention are not impaired.

The vinyl chloride-based resin composition of the present invention can be favorably used in any processing method such as roll processing, extrusion molding processing, a melt-cast method, and press molding processing.

Molded articles made of the vinyl chloride-based resin composition of the present invention can be used in products including piping materials such as pipes, joints, and piping parts; building and structural materials such as wall materials, flooring materials, window frames, corrugated sheets, and gutters; interior and exterior materials for automobiles; coating materials for electric wires; agricultural materials; food packaging materials; miscellaneous goods such as packing, gaskets, hoses, sheets, trays, bottles, and toys; and decorative panels, industrial panels, IC cases, and the like. The molded articles can be favorably used for transparent products.

### Examples

Hereinafter, the present invention will be described more specifically by way of examples and comparative examples, but the present invention is not limited thereto.

### Examples 1 and 2 and Comparative Examples 1 to 13

### Hard Vinyl Chloride-based Resin Composition for Transparent Products

Blend components shown in Table 1 were blended, and thus hard vinyl chloride-based resin compositions for transparent products of the present invention were obtained. In the examples, Compound No. 1 was used as the component (C). The obtained resin compositions were subjected to roll kneading in the conditions of 190°C × 30 rpm × 0.6 mm × 3 minutes to produce sheets.

The obtained sheets were placed in gear ovens in which the temperatures were set to 190°C and 200°C, and blackening time (minutes) was measured for thermal stability testing. Table 1 shows the results.

The sheets having a thickness of 0.6 mm obtained as described above were joined together and then pressed at 190°C for 5 minutes to produce a sheet having a thickness of 1 mm. Moreover, the sheets having a thickness of 0.6 mm obtained as described above were joined together and then pressed at 190°C for 30 minutes to produce a sheet having a thickness of 1 mm.

These sheets were subjected to transparency testing, thermal coloration resistance testing, and weathering coloration resistance testing-1 using the following methods. Table 1 shows the results.

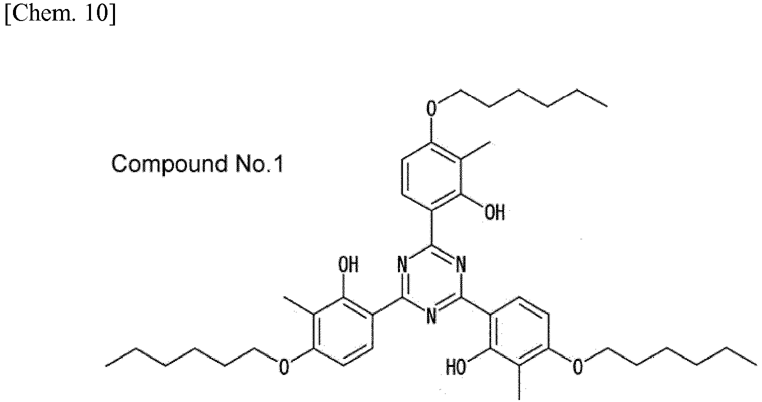

Comparative testing using the comparative examples having the compositions shown in Tables 1 and 2 was performed in the same manner as in Example 1. Tables 1 and 2 show the results.

In the comparative examples, Comparative Ultraviolet Absorbers 1 to 6 were used instead of Compound No. 1, which was the component (C) of Example 1.

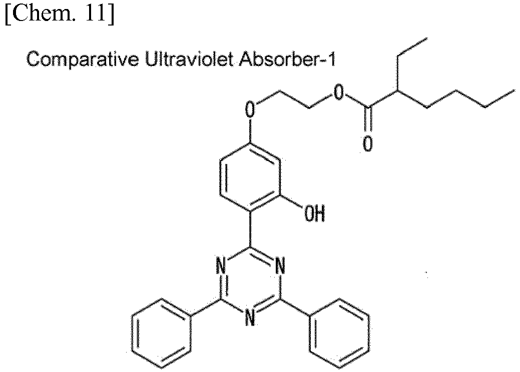

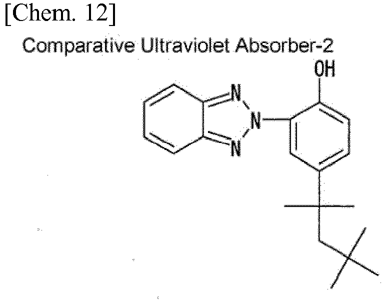

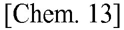

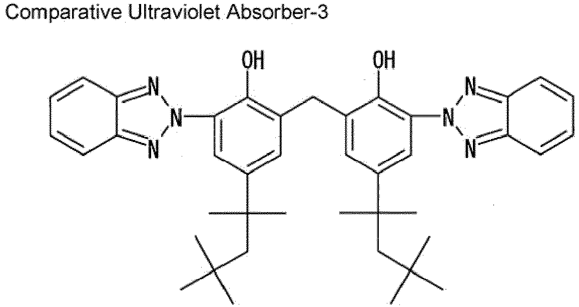

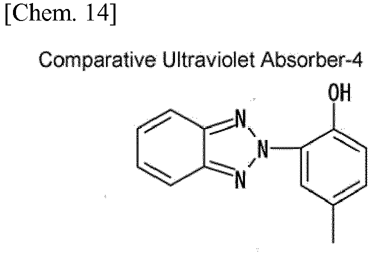

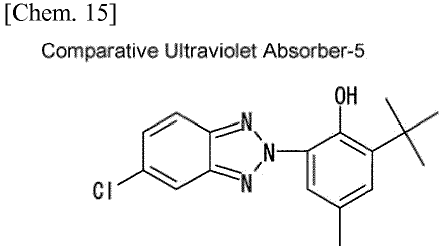

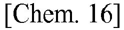

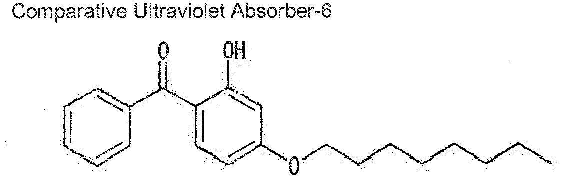

### Thermal Coloration Resistance Testing

Regarding the thermal coloration resistance, the yellowness index (YI) of each of the sheets having a thickness of 1 mm obtained through pressing at 90°C for 30 minutes was measured. The smaller the numerical value of the yellowness index is, the more the coloration is suppressed, and it can be said that the thermal coloration resistance is excellent.

### Weathering Coloration Resistance Testing-1

Metal Weather, Model KU-R5NCI (manufactured by Daipla Wintes Co., Ltd.) was used to perform, in the testing conditions, accelerated weather resistance testing for 4 days on each of the sheets having a thickness of 1 mm obtained through pressing at 190°C for 5 minutes. The yellowness indices (YI) of each sheet prior to and after the testing were measured, and the difference between the yellowness indices prior to and after the testing (ΔYI) was evaluated as the weathering coloration resistance. The smaller the numerical value of ΔYI is, the more the coloration is suppressed, and it can be said that the weather resistance is excellent.

### Testing conditions

Light source: Water-cooling metal halide lamp
Irradiance: 39.6 mW/cm²
Irradiation condition: The following cycle was repeated:
Lighting: at 50°C and 50%RH for 4 hours
Water spray: 10 seconds
No lighting: at 30°C and 98%RH for 4 hours
Water spray: 10 seconds

### Transparency Testing

The haze value of each of the sheets having a thickness of 1 mm obtained through pressing at 190°C for 5 minutes was measured.

**[Table 1]**

| | | Example | | Comparative Example | | | | | | |
|---|---|---|---|---|---|---|---|---|---|---|
| | | 1 | 2 | 1 | 2 | 3 | 4 | 5 | 6 | 7 |
| Vinyl chloride resin^{*1} | | 100 | 100 | 100 | 100 | 100 | 100 | 100 | 100 | 100 |
| Component (A) | | 0.3 | 0.3 | 0.3 | 0.3 | 0.3 | 0.3 | 0.3 | 0.3 | 0.3 |
| Zinc laurate | | | | | | | | | | |
| Component (B) | | 0.5 | 0.5 | 0.5 | 0.5 | 0.5 | 0.5 | 0.5 | 0.5 | 0.5 |
| Stearoylbenzoylmethane | | | | | | | | | | |
| Component (C) | | 0.2 | 0.4 | | | | | | | |
| Compound No. 1 | | | | | | | | | | |
| Component (D) | | 2.7 | 2.7 | 2.7 | 2.7 | 2.7 | 2.7 | 2.7 | 2.7 | 2.7 |
| ALCAMIZER P-93^{*2} | | | | | | | | | | |
| Phenol-based antioxidant^{*3} | | 0.1 | 0.1 | 0.1 | 0.1 | 0.1 | 0.1 | 0.1 | 0.1 | 0.5 |
| Lubricant^{*4} | | 0.5 | 0.5 | 0.5 | 0.5 | 0.5 | 0.5 | 0.5 | 0.5 | 0.5 |
| Comparative Ultraviolet Absorber-1 | | | | | 0.2 | 0.4 | | | | |
| Comparative Ultraviolet Absorber-2 | | | | | | | 0.2 | 0.4 | | |
| Comparative Ultraviolet Absorber-3 | | | | | | | | | 0.2 | 0.4 |
| Thermal stability (blackening time: min) | 190°C | 195 | 195 | 180 | 180 | 180 | 165 | 180 | 150 | 120 |
| | 200°C | 105 | 120 | 90 | 105 | 105 | 90 | 90 | 90 | 75 |
| Thermal coloration resistance (YI) | | 123.8 | 107.8 | 135.1 | 144.3 | 140.4 | 130.9 | 133.8 | 130.2 | 145.3 |
| Weathering coloration resistance (ΔYI) | | 23.1 | 12.2 | 139.6 | 38.3 | 23.4 | 31.2 | 34.2 | 35.0 | 20.8 |
| Transparency Haze value (%) | | 3.07 | 3.20 | 3.32 | 3.06 | 3.24 | 3.10 | 3.22 | 3.09 | 3.25 |

| | | | | | | | | | | |
|---|---|---|---|---|---|---|---|---|---|---|
| (blend components are expressed in parts by mass) *1: ZEST 1000Z (manufactured by Shin Dai-Ichi Vinyl Corporation) *2: Zinc-modified hydrotalcite (manufactured by Kyowa Chemical Industries Co., Ltd.) Mg_{3.0}ZnAl₂(OH)₁₂(CO₃)·3H₂O *3: Tetrakis[methylene-3-(3',5'-di-tertiary-butyl-4'-hydroxyphenyl) propionate]methane, ADK STAB AO-60 (manufactured by ADEKA Corporation) *4: G-72 (fatty acid-alcohol ester-based lubricant (composite ester)) (manufactured by Emery Oleochemicals Japan) | | | | | | | | | | |

**[Table 2]**

| | | Comparative Example | | | | | |
|---|---|---|---|---|---|---|---|
| | | 8 | 9 | 10 | 11 | 12 | 13 |
| Vinyl chloride resin^{*1} | | 100 | 100 | 100 | 100 | 100 | 100 |
| Component (A) | | 0.3 | 0.3 | 0.3 | 0.3 | 0.3 | 0.3 |
| Zinc laurate | | | | | | | |
| Component (B) | | 0.5 | 0.5 | 0.5 | 0.5 | 0.5 | 0.5 |
| Stearoylbenzoylmethane | | | | | | | |
| Component (C) | | | | | | | |
| Compound No. 1 | | | | | | | |
| Component (D) | | 2.7 | 2.7 | 2.7 | 2.7 | 2.7 | 2.7 |
| ALCAMIZER P-93^{*2} | | | | | | | |
| Phenol-based antioxidant^{*3} | | 0.1 | 0.1 | 0.1 | 0.1 | 0.1 | 0.1 |
| Lubricant^{*4} | | 0.5 | 0.5 | 0.5 | 0.5 | 0.5 | 0.5 |
| Comparative Ultraviolet Absorber-4 | | 0.2 | 0.4 | | | | |
| Comparative Ultraviolet Absorber-5 | | | | 0.2 | 0.4 | | |
| Comparative Ultraviolet Absorber-6 | | | | | | 0.2 | 0.4 |
| Thermal stability (blackening time: min) | 190°C | 180 | 180 | 180 | 180 | 180 | 180 |
| | 200°C | 90 | 90 | 105 | 105 | 105 | 105 |
| Thermal coloration resistance (YI) | | 120.1 | 122.7 | 127.2 | 131.4 | 135.2 | 120.2 |
| Weathering coloration resistance (ΔYI) | | 41.6 | 23.1 | 34.6 | 22.5 | 56.1 | 42.2 |
| Transparency Haze value (%) | | 3.07 | 3.15 | 3.08 | 3.18 | 3.03 | 3.16 |

| | | | | | | | |
|---|---|---|---|---|---|---|---|
| (blend components are expressed in parts by mass) *1: ZEST 1000Z (manufactured by Shin Dai-Ichi Vinyl Corporation) *2: Zinc-modified hydrotalcite (manufactured by Kyowa Chemical Industries Co., Ltd.) Mg_{3.0}ZnAl₂(OH)₁₂(CO₃)·3H₂O *3: Tetrakis[methylene-3-(3',5'-di-tertiary-butyl-4'-hydroxyphenyl) propionate]methane, ADK STAB AO-60 (manufactured by ADEKA Corporation) *4: G-72 (fatty acid-alcohol ester-based lubricant (composite ester)) (manufactured by Emery Oleochemicals Japan) | | | | | | | |

### Example 3 and Comparative Examples 14 to 19

### Soft Vinyl Chloride-based Resin Composition for transparent products

Blend components shown in Table 3 were blended, and thus soft vinyl chloride-based resin compositions of the present invention were obtained. In the example, Compound No. 1 used in Examples 1 and 2 was used as the component (C). The obtained resin compositions were subjected to roll kneading in the conditions of 160°C × 30 rpm × 0.7 mm × 5 minutes to produce sheets. The obtained sheets having a thickness of 0.7 mm were joined together and then pressed at 180°C for 5 minutes to produce a sheet having a thickness of 1 mm.

These sheets were subjected to weathering coloration resistance testing-2 using the following method. Table 3 shows the results.

Comparative testing using the comparative examples having the compositions shown in Table 3 was performed in the same manner as in Example 3. Table 3 shows the results. In the comparative examples, the Comparative Ultraviolet Absorbers 1 to 6 were used instead of Compound No. 1, which was the component (C) of Example 3.

### Weathering Coloration Resistance Testing-2

Metal Weather, Model KU-R5NCI (manufactured by Daipla Wintes Co., Ltd.) was used to perform, in the testing conditions, accelerated weather resistance testing for 6 days on each of the sheets having a thickness of 1 mm obtained through pressing at 19 0°C for 5 minutes. The yellowness indices (YI) of each sheet prior to and after the testing were measured, and the difference between the yellowness indices prior to and after the testing (ΔYI) was evaluated as the weathering coloration resistance. The smaller the numerical value of ΔYI is, the more the coloration is suppressed, and it can be said that the weather resistance is excellent.

### Testing conditions

Light source: water-cooling metal halide lamp
Irradiance: 75 mW/cm²
Irradiation condition: Continuous irradiation at 63°C and 50%RH.
Water spray for 120 seconds every 2 hours.

**[Table 3]**

| | Example | Comparative Example | | | | | |
|---|---|---|---|---|---|---|---|
| | 3 | 14 | 15 | 16 | 17 | 18 | 19 |
| Vinyl chloride resin^{*1} | 100 | 100 | 100 | 100 | 100 | 100 | 100 |
| Component (A) | 0.35 | 0.35 | 0.35 | 0.35 | 0.35 | 0.35 | 0.35 |
| Zinc stearate | | | | | | | |
| Component (B) | 0.05 | 0.05 | 0.05 | 0.05 | 0.05 | 0.05 | 0.05 |
| Dibenzoylmethane | | | | | | | |
| Component (C) | 0.4 | | | | | | |
| Compound No. 1 | | | | | | | |
| Component (D) | 1.8 | 1.8 | 1.8 | 1.8 | 1.8 | 1.8 | 1.8 |
| MAGCELER 1^{*2} | | | | | | | |
| Phosphorus-based antioxidant^{*3} | 1.5 | 1.5 | 1.5 | 1.5 | 1.5 | 1.5 | 1.5 |
| Plasticizer^{*4} | 60 | 60 | 60 | 60 | 60 | 60 | 60 |
| Comparative Ultraviolet Absorber-1 | | 0.4 | | | | | |
| Comparative Ultraviolet Absorber-2 | | | 0.4 | | | | |
| Comparative Ultraviolet Absorber-3 | | | | 0.4 | | | |
| Comparative Ultraviolet Absorber-4 | | | | | 0.4 | | |
| Comparative Ultraviolet Absorber-5 | | | | | | 0.4 | |
| Comparative Ultraviolet Absorber-6 | | | | | | | 0.4 |
| Weathering coloration resistance (ΔYI) 12.7 21.4 22.7 57.8 31.6 51.2 68.5 | | | | | | | |

| | | | | | | | |
|---|---|---|---|---|---|---|---|
| (blend components are expressed in parts by mass) *1: ZEST 1000Z (manufactured by Shin Dai-Ichi Vinyl Corporation) *2: Hydrotalcite (manufactured by Kyowa Chemical Industries Co., Ltd.) Mg_{4.2}Al₂(OH)₁₃(CO₃)·3H₂O *3: ADK STAB 1500 (manufactured by ADEKA Corporation) *4: Diisononyl phthalate | | | | | | | |

## Claims

1. A vinyl chloride-based resin composition comprising:
a vinyl chloride-based resin in an amount of 100 parts by mass;
an organic acid zinc salt as a component (A) in an amount of 0.01 to 10.0 parts by mass;
a β-diketone compound as a component (B) in an amount of 0.01 to 10.0 parts by mass; and
one or more triazine-based compounds as a component (C) in an amount of 0.01 to 20.0 parts by mass, the triazine-based compounds being selected from the following compounds No. 1 to 5:

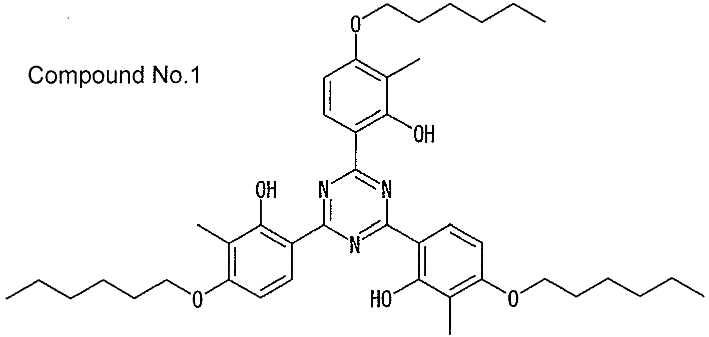

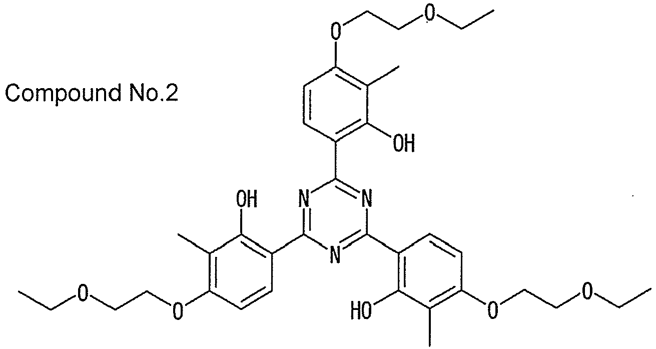

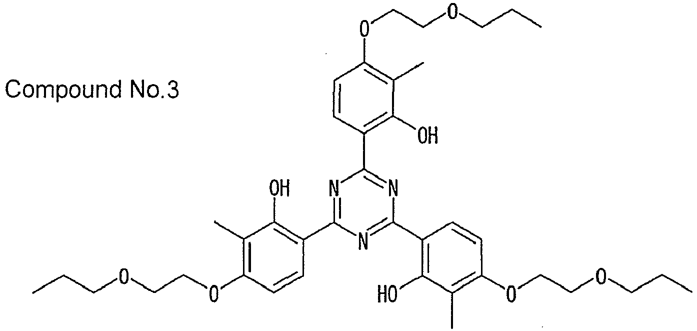

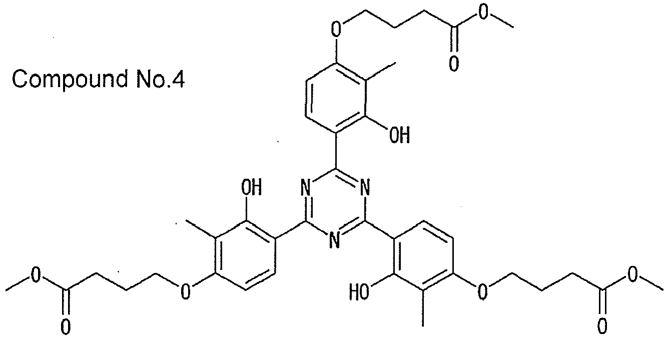

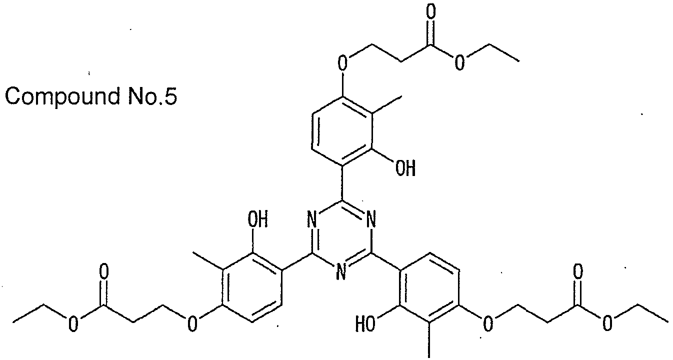

2. The vinyl chloride-based resin composition according to claim 1, further comprising a hydrotalcite compound as a component (D) in an amount of 0.01 to 10.0 parts by mass.

3. Use of the vinyl chloride-based resin composition according to claim 1 or 2 in transparent products.

4. A molded article made of the vinyl chloride-based resin composition according to claim 1 or 2.

## Patentansprüche

1. Harzzusammensetzung auf Vinylchloridbasis, umfassend:
ein Harz auf Vinylchloridbasis in einer Menge von 100 Massenteilen;
ein Zinksalz einer organischen Säure als Komponente (A) in einer Menge von 0,01 bis 10,0 Massenteilen;
eine β-Diketonverbindung als Komponente (B) in einer Menge von 0,01 bis 10,0 Massenteilen; und
eine oder mehrere Verbindungen auf Triazinbasis als Komponente (C) in einer Menge von 0,01 bis 20,0 Massenteilen, wobei die Verbindungen auf Triazinbasis aus den folgenden Verbindungen Nr. 1 bis 5 ausgewählt sind:

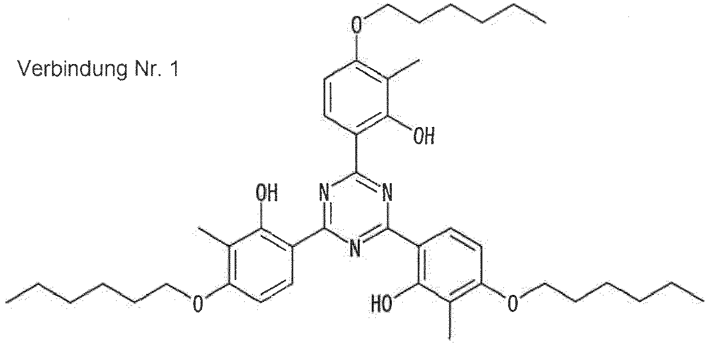

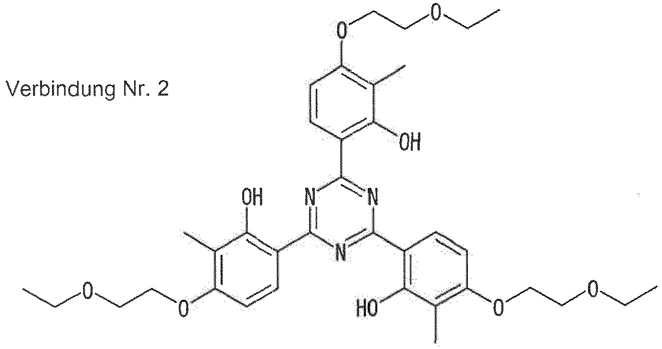

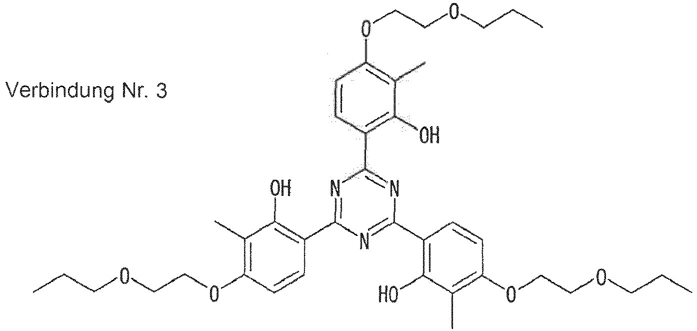

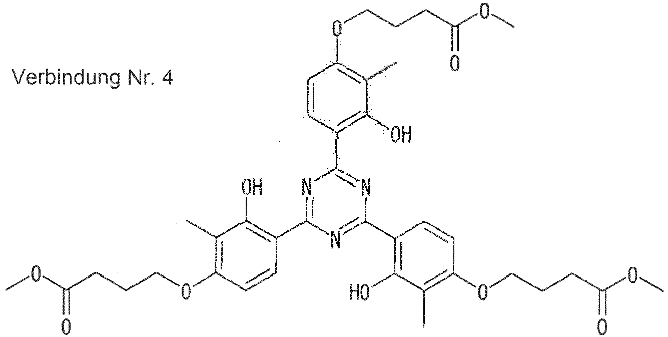

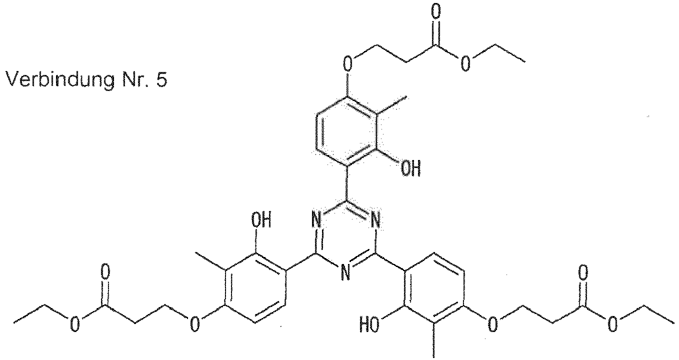

2. Harzzusammensetzung auf Vinylchloridbasis nach Anspruch 1, ferner umfassend eine Hydrotalcitverbindung als Komponente (D) in einer Menge von 0,01 bis 10,0 Massenteilen.

3. Verwendung der Harzzusammensetzung auf Vinylchloridbasis nach Anspruch 1 oder 2 in transparenten Produkten.

4. Formteil aus der Harzzusammensetzung auf Vinylchloridbasis nach Anspruch 1 oder 2.

## Revendications

1. Composition de résine à base de chlorure de vinyle comprenant:
une résine à base de chlorure de vinyle en une quantité de 100 parties en masse;
un sel de zinc d'acide organique en tant que composant (A) en une quantité de 0,01 à 10,0 parties en masse;
un composé β-dicétone en tant que composant (B) en une quantité de 0,01 à 10,0 parties en masse; et
un ou plusieurs composés à base de triazine en tant que composant (C) en une quantité de 0,01 à 20,0 parties en masse, les composés à base de triazine étant choisis parmi les composés n ° 1 à 5 suivants:

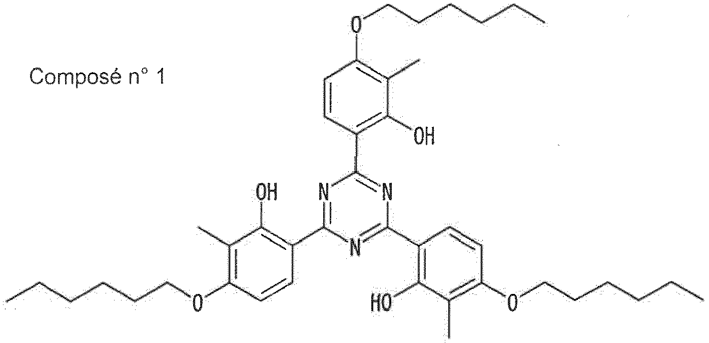

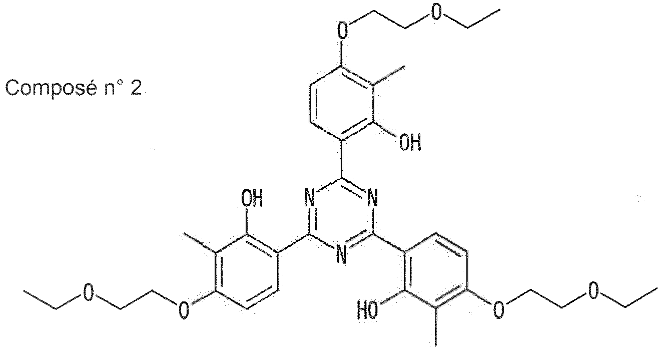

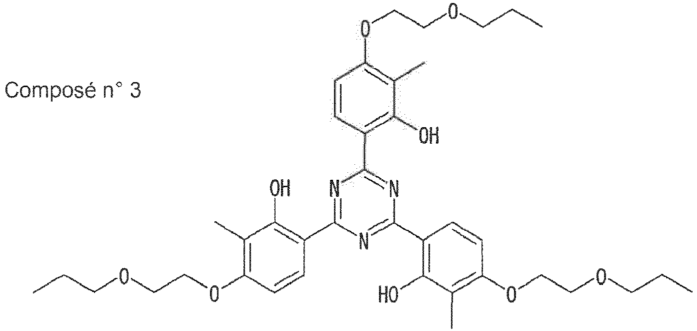

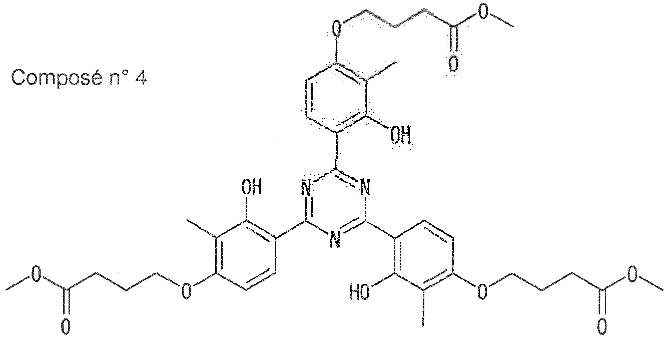

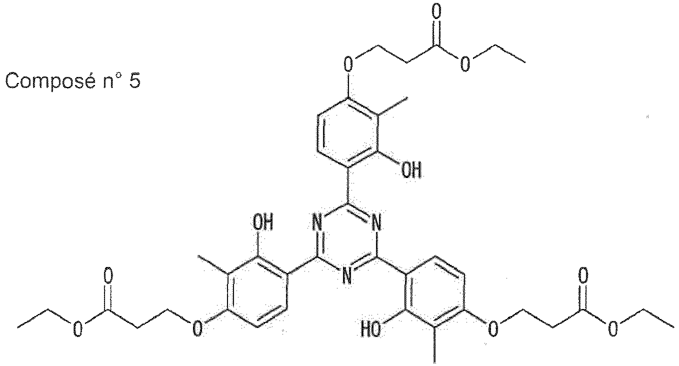

2. Composition de résine à base de chlorure de vinyle selon la revendication 1, comprenant en outre un composé hydrotalcite en tant que composant (D) en une quantité de 0,01 à 10,0 parties en masse.

3. Utilisation de la composition de résine à base de chlorure de vinyle selon la revendication 1 ou 2 dans des produits transparents.

4. Article moulé constitué de la composition de résine à base de chlorure de vinyle selon la revendication 1 ou 2.
